# EUROPÄISCHE PATENTSCHRIFT

(11) **EP 3 441 482 B1**
(45) Veröffentlichungstag und Bekanntmachung des Hinweises auf die Patenterteilung: **30.03.2022**
(21) Anmeldenummer: 18187677.2
(22) Anmeldetag: 07.08.2018
(51) Int. Cl.: C22B 7/00, B28D 5/00, B24C 9/00

(54) **RECYCLINGVERFAHREN FÜR SCHLEIFKÖRNER**
METHOD FOR THE RECYCLING OF ABRASIVE GRAINS
PROCÉDÉ DE RECYCLAGE POUR PARTICULES ABRASIVES

(30) Priorität: 08.08.2017 DE 102017118017
(43) Veröffentlichungstag der Anmeldung: 13.02.2019
(73) Patentinhaber: PDR Recycling GmbH + Co KG, 95349 Thurnau (DE)
(72) Erfinder: GIANI, Holger Mario, 52074 Aachen (DE); SCHENKE, Lukas, 50823 Köln (DE); SCHNELL, Matthias, 52066 Aachen (DE); Clausen, Adele, 52062 Aachen (DE)
(74) Vertreter: Schneiders & Behrendt Bochum

(56) Entgegenhaltungen:
- WO-A2-00/53382
- CN-B- 101 280 175
- DE-A1- 19 635 941
- DE-T2- 69 904 986

## Beschreibung

Die Erfindung betrifft ein Verfahren zur Rückgewinnung von Schleifkörnern aus schleifkornhaltigen Rückständen, insbesondere aus schleifkornhaltigen Rückständen von gebundenen Schleifmitteln.

Gebundene Schleifmittel werden in der Regel aus Rohware konfektioniert. Diese Rohware kann gerollt und mehrere Meter lang und breit sein. Bei der Produktion und der anschließenden Konfektionierung kommt es regelmäßig zu Produktionsrückständen insbesondere durch Verschnitt, Stanzreste und Fehlchargen. Der Anteil der Produktionsrückstände kann 10% oder mehr, bezogen auf die Rohware, ausmachen.

Bekannte Verfahren zur Rückgewinnung von Schleifkörnern beziehen sich auf die Rückgewinnung von Schleifkörnern aus Suspensionen von Schleif- und Schneidprozessen sowie aus Schleifschlämmen. Beispielhaft sei die DE 699 04 986 T2 genannt, die im Wesentlichen ein Verfahren zur Auftrennung von Polyethylenglykol (PEG) und Siliciumcarbid aus einer Flüssigkeit offenbart.

Verfahren zur Rückgewinnung von Schleifkörnern aus schleifkornhaltigen Rückständen mit gebundenen Schleifmitteln sind beispielsweise aus der DE 196 35 941 A1 bekannt. In dem bekannten Verfahren werden die gebundenen Schleifmittel in einem Wirbelschichtofen verbrannt.

Aufgabe der vorliegenden Erfindung ist es, ein alternatives Verfahren zur Verfügung zu stellen, bei dem die rückzugewinnenden Schleifkörner ihre ursprünglichen Materialeigenschaften im Wesentlichen beibehalten, zumindest aber normativen Anforderungen genügen.

Auch ist es Aufgabe der Erfindung, die rückgewonnenen Schleifkörner als sekundären Rohstoff in einer Form zur Verfügung zu stellen, die dem Verwerter den Einsatz der rückgewonnenen Schleifkörner im bestehenden Produktionsbetrieb möglichst ohne zusätzliche Investitionskosten erlaubt.

Ferner ist es auch Aufgabe der Erfindung ein Verfahren zur Verfügung zu stellen, das möglichst energiesparend durchführbar ist.

Gelöst wird diese Aufgabe durch ein Verfahren mit den Merkmalen des Anspruchs 1. Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Das erfindungsgemäße Verfahren zur Rückgewinnung von gebundenen Schleifkörnern aus schleifkornhaltigen Rückständen umfasst folgende Schritte:
(A) Bereitstellen von schleifkornhaltigen Rückständen;
(B) Mechanische Vorkonditionierung der schleifkornhaltigen Rückstände aus (A);
(C) Thermischer Materialaufschluss der vorkonditionierten schleifkornhaltigen Rückstände aus (B);
(D) Desagglomeration der thermisch aufgeschlossenen schleifkornhaltigen Rückstände aus (C);
(E) Trennung der desagglomerierten Schleifkörner aus (D) von sonstigen Rückständen,
wobei der thermische Materialaufschluss gemäß Schritt (C) in zumindest zwei Schritten erfolgt, nämlich in Schritt 1 durch eine Pyrolyse bei Temperaturen zwischen 400 °C und 600 °C und in Schritt 2 durch eine Vergasung durch die Zufuhr von Sauerstoff zur Pyrolyse.

Gebundene Schleifmittel im Sinne dieser Erfindung sind solche Schleifmittel, die in Form von Schleifkörnern definierter Partikelgrößenverteilung vorliegen und die mittels Bindemitteln untereinander oder auf oder in einer Trägermatrix gebunden sind. Hierzu gehören beispielsweise Schleifpapier, Schleifgewebe und Schleiffiber sowie Gewebescheiben, ferner Trenn- und Schruppscheiben und Bürsten mit Schleifborstenbesatz, wobei diese Aufzählung nicht abschließend ist und insbesondere auch die jeweilige Rohware umfasst. Das Bindemittel auf einer Trägermatrix ist zumeist zweischichtig gestaltet und umfasst eine zwischen Trägermatrix und Schleifkorn angeordnete Schicht Grundbinder und eine darauf gelagerte Schicht Deckbinder.

Schleifkörner im Sinn dieser Anmeldung sind alle natürlichen und synthetischen Kornwerkstoffe, insbesondere solche Kornwerkstoffe, die die verfahrensbedingte Wärmeeinwirkung überdauern, wie beispielsweise Al₂O₃ und Modifikationen davon, Keramik, Siliziumkarbid, Quarz, Granat, Diamant, Zirkon oder Bornitrid.

Schleifkornhaltige Rückstände im Sinne dieser Erfindung sind Rückstände an Schleifmitteln, die schleifkornhaltig sind, die also neben der Trägermatrix und/oder dem Bindemittel auch Schleifkörner umfassen. Schleifkornhaltige Rückstände können sowohl Produktionsrückstände als auch gebrauchte Schleifmittel umfassen.

Produktionsrückstände im Sinn dieser Erfindung sind solche schleifkornhaltigen Rückstände, die während der Produktion oder vor, während oder nach der anschließenden Konfektionierung der Schleifmittel anfallen und im Wesentlichen ungebraucht sind. Typische Produktionsrückstände umfassen beispielsweise Stanzreste, Verschnitte und Mangelware.

Gebrauchte Schleifmittel im Sinn dieser Erfindung sind solche schleifkornhaltigen Materialien, die bereits in einem Schleifprozess gebraucht wurden.

Die gemäß Schritt (A) bereitgestellten schleifkornhaltigen Rückstände können prinzipiell alle denkbaren Rückstände von Schleifmitteln gemäß dieser Erfindung sein. Dazu gehören insbesondere Produktionsrückstände und gebrauchte Schleifmittel.

Bevorzugt sind schleifkornhaltige Rückstände aus Produktionsrückständen insoweit, als dass diese Rückstände im Wesentlichen unbenutzte Schleifkörner zur Verfügung stellen, die Rückstände nicht durch eine vorherige gegebenenfalls unbekannte Anwendung kontaminiert und/oder die Schleifkörner in ihren ursprünglichen Materialeigenschaften verändert sind, die Produktionsrückstände in größerer Menge zur Verfügung stehen, als dies bei gebrauchten Schleifmitteln in der Regel zu erwarten ist, und die Produktionsrückstände in der Regel bereits nach Korngrößen und/oder Kornarten sortiert vorliegen können, was den späteren Aufbereitungsprozess der recycelten Schleifkörner vereinfacht.

Die mechanische Vorkonditionierung gemäß Schritt (B) erfolgt bevorzugt durch maschinelle Zerkleinerung. Denkbar sind schlagende Beanspruchungen zum Aufschließen der Bindemittel und reißende Zerkleinerung, beispielsweise mittels eines Kammwalzenzerkleinerers, der Produktionsrückstände, um eine für den thermischen Materialaufschluss geeignete Größe des Gutes, auch hinsichtlich der Zuführung des Gutes zu dem thermischen Prozess, zu erreichen.

Der thermische Materialaufschluss in Schritt (C) erfolgt erfindungsgemäß in zumindest zwei Schritten, nämlich in einem ersten Schritt durch eine Pyrolyse bei Temperaturen zwischen 400 °C und 600 °C und in einem zweiten Schritt durch eine Vergasung durch die Zufuhr von Sauerstoff zur Pyrolyse.

Der thermische Materialaufschluss in Schritt (C) kann alternativ auch durch eine sonstige Kombination von Pyrolyse, Vergasung oder Verbrennung in einem zwei- oder mehrstufigen Verfahren erfolgen, beispielsweise durch eine Pyrolyse mit anschließender Koksoxidation. Die Atmosphäre kann (atmosphärischen) Sauerstoff oder weitere oxidierende Vergasungsmittel wie beispielsweise Kohlendioxid oder Wasserdampf umfassen. Hierdurch werden die Trägermatrix und/oder die Bindemittel idealerweise vollständig zersetzt, sodass nahezu nur noch das Schleifkorn und die sonstigen Aschebestandteile übrig bleiben.

Eine zufriedenstellende Zersetzung der Trägermatrix und der Bindemittel ließ sich bei Rückgewinnungsversuchen mittels Verbrennung der schleifkornhaltigen Rückstände ab Temperaturen von etwa 500 °C erzielen. Dabei ist bei der Wahl der Temperatur unbedingt auf die thermische Belastbarkeit des rückzugewinnenden Schleifkorns zu achten. So können bereits bei einer angestrebten Verbrennungstemperatur von 500 °C bis 600 °C lokale Spitzenwerte von bis zu 800 °C nicht immer zuverlässig vermieden werden, was zu Beeinträchtigungen der ursprünglichen Materialeigenschaften und somit zu einer möglichen Verfehlung normativer Anforderungen führen kann. Dies trifft insbesondere auf temperatursensible Materialien wie beispielsweise Diamant zu, der ab circa 800 °C unter Sauerstoffanwesenheit oxidiert. Zudem kann es zum Schmelzen von Aschebestandteilen kommen, wodurch Schleifkorn eingeschlossen und somit nicht rückgewonnen werden kann.

Tatsächlich sind für den thermischen Materialaufschluss durch Verbrennung auch deutlich höhere Temperaturen als 600 °C denkbar. Sofern keine materialmindernden Auswirkungen auf das Schleifkorn feststellbar sind, kann der thermische Materialaufschluss auch bei Temperaturen von 800 °C und darüber erfolgen.

Die Pyrolyse mit anschließender Vergasung kann analog zur Verbrennung ab 500 °C zufriedenstellende Ergebnisse liefern, zusätzlich ist ein solcher Prozess hinsichtlich ungewollter Temperaturspitzen tendenziell besser kontrollierbar als eine Verbrennung.

Sind Pyrolyse und Oxidation Teil des thermischen Materialaufschlusses, so erfolgen sie in Schritt (C) bei Temperaturen ab 400 °C, wobei Temperaturen zwischen 450 °C und 750 °C und insbesondere zwischen 500 °C und 600 °C zu bevorzugen sind, sofern hiermit bereits beste Ergebnisse erzielt werden können.

Sofern keine qualitätsmindernden Auswirkungen auf das Schleifkorn feststellbar sind, kann der Prozess auch bei Temperaturen von 800 °C bis 1200 °C und darüber erfolgen.

Auch bei der Wahl des zum thermischen Materialaufschluss geeigneten Verfahrens gilt, dass diese insbesondere von den Materialeigenschaften des rückzugewinnenden Schleifkorns abhängt. Im Vordergrund steht immer das bestmögliche Ergebnis.

Das bestmögliche Ergebnisse im Sinne der Erfindung schließt ein, dass die Prozesstemperaturen einerseits ausreichen, um die Trägermatrix und/oder die Bindemittel der schleifkornhaltigen Rückstände nahezu vollständig thermochemisch zu zersetzen, sodass in den Rückständen nach dem thermischen Materialaufschluss im Wesentlichen das Schleifkorn, mineralische Rückstände und nur minimale Kohlenstoffrückstände enthalten sind. Andererseits sollen die Schleifkörner im Wesentlichen ihre ursprünglichen Materialeigenschaften behalten und als sekundäre Rohstoffe normativen Anforderungen genügen.

Die Ergebnisse der Pyrolyse lassen sich noch weiter im Sinne dieser Erfindung verbessern, indem der Pyrolyse Sauerstoff in geringen Mengen zugeführt wird. Besonders gute Ergebnisse mit einer nahezu vollständigen Zersetzung der Trägermatrix und der Bindemittel ließen sich erzielen, indem der Pyrolyse gegebenenfalls auch schub- oder stufenweise Sauerstoff in einer Menge von 1 Vol.-% bis 10 Vol.-%, bevorzugt von 2 Vol.-% bis 8 Vol.-% und insbesondere von 4 Vol.-% bis 6 Vol.-% bezogen auf das Volumen des Pyrolysegases zugeführt wird. Entsprechend kann die Pyrolyse gemäß den Anforderungen an den thermischen Materialaufschluss stufenweise in eine sauerstoffreduzierte Verbrennung überführt werden.

Es ist nicht auszuschließen, dass die Rückgewinnung bestimmter Schleifkörner aufgrund der besonderen Struktur dieser Schleifkörner und/oder der Bindemittel und/oder der Unterlage einen anderen Temperaturbereich als den bevorzugten im thermischen Materialaufschluss erfordert. Auch ist es denkbar, dass eine Behandlung bestimmter Schleifmittel aufgrund der besonderen Struktur derer Schleifkörner und/oder der Bindemittel und/oder der Unterlage eine andere Art des thermischen Materialaufschlusses erfordert als den bevorzugten. Entsprechende Abwandlungen des erfindungsgemäßen Verfahrens sind für den Fachmann bei Kenntnis der Materialeigenschaften der zu recycelnden Schleifmittel ohne weiteres erfinderisches Zutun aufgrund der vorliegenden Offenbarung möglich.

Die Desagglomeration in Schritt (D) ist notwendig, da das Asche-Korngemisch nach der thermischen Behandlung durch geringe Haftkräfte in einer Matrix (Agglomerate) zusammengehalten wird und ohne Desagglomeration im nachfolgenden Schritt (E) nicht effektiv in eine Asche- und eine Kornfraktion getrennt werden kann. Die Desagglomeration kann mittels Strahlmühle (beispielsweise Prall-Scherbeanspruchung) oder sonstiger Mahlprozesse (beispielsweise Trommelmühle oder Taumelsieb mit Zerkleinerungskörpern) erfolgen. Weitere Verfahren sind dem Fachmann bekannt. Um das Schleifkorn nicht zu zerstören, ist auf eine materialschonende Zerkleinerung der Asche-Korn-Agglomerate zu achten. Unter Verwendung von beispielsweise gummierten Zerkleinerungskörpern in der Trommelmühle und dem Taumelsieb oder dem Einstellen von geringen Fluidgeschwindigkeiten in der Strahlmühle werden lediglich die Bindekräfte im Agglomerat überwunden ohne dass das Schleifkorn zerstört wird.

Die Trennung der Schleifkörner gemäß Schritt (E) erfolgt durch mechanische beziehungsweise physikalische Trennprozesse, beispielsweise durch Geräte, die nach dem Prinzip der Sichtung, beispielsweise der Fliehkraft-Gegenstromrichtung, arbeiten oder durch Siebung. Die Reinheit des Produktes kann letztendlich durch die Wahl eines oder mehrerer geeigneter Geräte den Anforderungen angepasst werden. Dem Fachmann sind hier verschiedene Möglichkeiten bekannt. Bevorzugt erfolgt die Trennung der Schleifkörner erfindungsgemäß durch Feinstsichtung und Siebung.

Optional umfasst das erfindungsgemäße Verfahren nach Schritt (E) einen weiteren Schritt (F), nämlich die Klassierung nach unterschiedlichen Korngrößen. Dieser Schritt ist als optional anzusehen, da viele Betriebe, die Schleifkörner verarbeiten, bereits über Klassierungsanlagen verfügen und schon das nach Schritt (E) erhaltene Schleifkörnergut zur Wiederverwertung nutzen könnten. Ein solcher Verfahrensschritt bietet sich dennoch an, um bereits größenklassiertes Schleifkorngut als Recyclingware anbieten zu können.

Für die Klassierung der Schleifkörner stehen verschiedene Optionen zur Verfügung, die dem Fachmann bekannt sind und die auch geeignet sind, recycelte Schleifkörner zu klassieren. Bevorzugt erfolgt die Klassierung von Makrokörnungen erfindungsgemäß mittels Siebung, jedoch wird der Fachmann ein Verfahren wählen, das seinen Ansprüchen am ehesten genügt beziehungsweise wird er auf bereits vorhandene Verfahren zurückgreifen. Mikrokörnungen werden gesiebt, gesichtet oder nassmechanisch getrennt.

## Patentansprüche

1. Verfahren zur Rückgewinnung von Schleifkörnern aus schleifkornhaltigen Rückständen umfassend folgende Schritte:
(A) Bereitstellen von schleifkornhaltigen Rückständen;
(B) Mechanische Vorkonditionierung der schleifkornhaltigen Rückstände aus (A);
(C) Thermischer Materialaufschluss der vorkonditionierten schleifkornhaltigen Rückstände aus (B);
(D) Desagglomeration der thermisch aufgeschlossenen schleifkornhaltigen Rückstände aus (C);
(E) Trennung der desagglomerierten Schleifkörner aus (D) von sonstigen Rückständen,
**dadurch gekennzeichnet, dass** der thermische Materialaufschluss gemäß Schritt (C) in zumindest zwei Schritten erfolgt, wobei
Schritt 1 eine Pyrolyse bei Temperaturen zwischen 400 °C und 600 °C und
Schritt 2 eine Vergasung durch die Zufuhr von Sauerstoff zur Pyrolyse umfasst.

2. Verfahren nach Anspruch 1, **dadurch gekennzeichnet, dass** der thermische Materialaufschluss in Schritt (C) als Schritt 3 eine Verbrennung umfasst.

3. Verfahren nach Anspruch 1 oder 2, **dadurch gekennzeichnet, dass** der thermische Materialaufschluss der Schritte 1 und 2 in Schritt (C) bei Temperaturen zwischen 500 °C und 600 °C erfolgt.

4. Verfahren nach Anspruch 1, **dadurch gekennzeichnet, dass** der Pyrolyse Sauerstoff in einer Menge von 1 Vol.-% bis 10 Vol.-% bezogen auf das Volumen des Pyrolysegases zugeführt wird.

5. Verfahren nach Anspruch 4, **dadurch gekennzeichnet, dass** der Pyrolyse Sauerstoff in einer Menge von 2 Vol.-% bis 8 Vol.-% und insbesondere von 4 Vol.-% bis 6 Vol.-%, bezogen auf das Volumen des Pyrolysegases, zugeführt wird.

6. Verfahren nach Anspruch 1, **dadurch gekennzeichnet, dass** die Trennung der Schleifkörner in Schritt (E) mittels Feinstsichtung und/oder Siebung erfolgt.

7. Verfahren nach Anspruch 1, **dadurch gekennzeichnet, dass** die mechanische Vorkonditionierung durch maschinelle Zerkleinerung erfolgt.

8. Verfahren nach Anspruch 1, **dadurch gekennzeichnet, dass** auf Schritt (E) als weiterer Schritt die
(F) Klassierung nach unterschiedlichen Schleifkorngrößen folgt.

9. Verfahren nach Anspruch 8, **dadurch gekennzeichnet, dass** die Klassierung von unterschiedlichen Schleifkorngrößen gemäß Schritt (F) durch Siebung erfolgt.

10. Verfahren nach einem der vorherigen Ansprüche, **dadurch gekennzeichnet, dass** es sich bei den schleifkornhaltigen Rückständen um Produktionsrückstände handelt.

11. Verfahren nach einem der Ansprüche 1 bis 9, **dadurch gekennzeichnet, dass** es sich bei den schleifkornhaltigen Rückständen um gebrauchte Schleifmittel handelt.

## Claims

1. Method for recovering abrasive grains from residues containing abrasive grains, comprising the following steps:
(A) provision of residues containing abrasive grains;
(B) mechanical preconditioning of the residues containing abrasive grains from (A);
(C) thermal material breakdown of the preconditioned residues containing abrasive grains from (B);
(D) deagglomeration of the thermally broken-down residues containing abrasive grains from (C);
(E) separation of the deagglomerated abrasive grains from (D) from other residues,
**characterised in that** the thermal material breakdown according to step (C) takes place in at least two steps, wherein
step 1 comprises pyrolysis at temperatures of between 400 °C and 600 °C and
step 2 comprises gasification by the supply of oxygen to the pyrolysis.

2. Method according to claim 1, **characterised in that** the thermal material breakdown in step (C) comprises combustion as step 3.

3. Method according to claim 1 or 2, **characterised in that** the thermal material breakdown of steps 1 and 2 takes place in step (C) at temperatures of between 500 °C and 600 °C.

4. Method according to claim 1, **characterised in that** oxygen in a quantity of 1 percent by volume to 10 percent by volume with reference to the volume of the pyrolysis gas is supplied to the pyrolysis.

5. Method according to claim 4, **characterised in that** oxygen in a quantity of 2 percent by volume to 8 percent by volume and in particular of 4 percent by volume to 6 percent by volume with reference to the volume of the pyrolysis gas is supplied to the pyrolysis.

6. Method according to claim 1, **characterised in that** the separation of the abrasive grains in step (E) takes place by means of fine sifting and/or screening.

7. Method according to claim 1, **characterised in that** the mechanical preconditioning takes place by mechanical crushing.

8. Method according to claim 1, **characterised in that** following step (E) as a further step is
(F) classification according to different abrasive grain sizes.

9. Method according to claim 8, **characterised in that** the classification of different abrasive grain sizes according to step (F) takes place by screening.

10. Method according to any one of the previous claims, **characterised in that** the residues containing abrasive grains are production residues.

11. Method according to any one of claims 1 to 9, **characterised in that** the residues containing abrasive grains are used abrasives.

## Revendications

1. Procédé de récupération de grains abrasifs à partir de résidus contenant des grains abrasifs, comprenant des étapes suivantes :
(A) de fourniture de résidus contenant des grains abrasifs ;
(B) de préconditionnement mécanique des résidus contenant des grains abrasifs issus de (A) ;
(C) de dissolution thermique de matériau des résidus contenant des grains abrasifs préconditionnés issus de (B) ;
(D) de désagglomération des résidus contenant des grains abrasifs dissous thermiquement issus de (C) ;
(E) de séparation des grains abrasifs désagglomérés issus de (D) d'autres résidus,
**caractérisé en ce que** la dissolution thermique de matériau selon l'étape (C) est effectuée en au moins deux étapes, dans lequel
l'étape 1 comprend une pyrolyse à des températures entre 400 °C et 600 °C, et
l'étape 2 comprend une gazéification par l'amenée d'oxygène pour la pyrolyse.

2. Procédé selon la revendication 1, **caractérisé en ce que** la dissolution thermique de matériau lors de l'étape (C) comprend en tant qu'étape 3 une combustion.

3. Procédé selon la revendication 1 ou 2, **caractérisé en ce que** la dissolution thermique de matériau des étapes 1 et 2 lors de l'étape (C) est effectuée à des températures entre 500 °C et 600 °C.

4. Procédé selon la revendication 1, **caractérisé en ce que** de l'oxygène est amené à la pyrolyse en une quantité de 1 % en vol. à 10 % en vol. par rapport au volume du gaz de pyrolyse.

5. Procédé selon la revendication 4, **caractérisé en ce que** de l'oxygène est amené à la pyrolyse en une quantité de 2 % en vol. à 8 % en vol. et en particulier de 4 % en vol. à 6 % en vol. par rapport au volume du gaz de pyrolyse.

6. Procédé selon la revendication 1, **caractérisé en ce que** la séparation des grains abrasifs est effectuée à l'étape (E) au moyen d'un tri de matières fines et/ou d'un tamisage.

7. Procédé selon la revendication 1, **caractérisé en ce que** le préconditionnement mécanique est effectué par broyage à la machine.

8. Procédé selon la revendication 1, **caractérisé en ce que** l'étape (E) est suivie en tant qu'autre étape par
(F) la classification selon différentes tailles de grains abrasifs.

9. Procédé selon la revendication 8, **caractérisé en ce que** la classification de différentes tailles de grains abrasifs selon l'étape (F) est effectuée par tamisage.

10. Procédé selon l'une quelconque des revendications précédentes, **caractérisé en ce que** les résidus contenant des grains abrasifs sont des résidus de production.

11. Procédé selon l'une quelconque des revendications 1 à 9, **caractérisé en ce que** les résidus contenant des grains abrasifs sont des agents abrasifs usagés.
